# EUROPEAN PATENT APPLICATION

(11) **EP 1 736 679 A2**
(43) Date of publication of application: **27.12.2006**
(21) Application number: 06012782.6
(22) Date of filing: 21.06.2006
(51) Int. Cl.: F16D 55/227

(54) **Disc brake**

(30) Priority: 21.06.2005 US 160374
(71) Applicant: ROBERT BOSCH GMBH, 70442 Stuttgart (DE)
(72) Inventor: Mackiewicz, John, Edmund, Niles Michigan 49120 (US)
(74) Representative: Costello-Saile, Thomas Johannes

(57) **Abstract**

A disc brake (10) having a support member (12) that is secured to a vehicle with first (40) and second (40') bores that are perpendicular to a rotor (34) and a caliper (16) with an actuation.section (18) having a piston (26) for applying an actuation force to move friction members (30,32) into engagement with the rotor (34). A first guide pin (36), affixed to the caliper (16) has a first bearing surface (64) and a second guide pin (36'), affixed to the caliper (16) has a second bearing surface (64') that respectively engage the first bore (40) and second bore (40') in a plane along the center of gravity (c/g) of the caliper (16). The center of gravity (c/g) of the caliper (16) is sustained by compensating for any change in a relationship of a piston (26) and an actuation chamber (28) by adding additional fluid to the actuation chamber (28) on movement of the piston (24) out of the actuation chamber (28) such that an actuation force is always perpendicularly applied to the rotor (34).

## Description

This invention relates to a disc brake for use in a brake system wherein first and second guide pins are corresponding fixed to ears located on the corners of a caliper and extends through bores in a support member to align first and second friction members with a rotor and wherein bearing surfaces are located along a center of gravity of the caliper such that an actuation force is always applied perpendicular to the rotor.

### BACKGROUND OF THE INVENTION

Disc brakes such as disclosed in 4,958,703; 5,749,445; 5,810,112; 5,819,884 5,934,416 have a caliper with guide rails that are spaced apart from each other for receiving first and second friction members that slide during a brake application. In such disc brakes, first and second guide pins are correspondingly retained in first and second bores in a support member that is fixed to the frame of a vehicle. The first and second guide pins move in the first and second bores during a brake application and as wear decreases the thickness of the first and second friction members though the engagement with a rotor. Unfortunately as a result of such wear, the bearing engagement surface correspondingly decreases and under some circumstances the resistance to a moment caused by the engagement of the friction members with the rotor may cause twisting of the caliper such that the wear surface of the friction members is tapered. The tapered wear of a friction member requires replacement before a projected usefulness life for a friction member is achieved.

In U.S. Patent 6,454,056 structure is disclosed whereby first and second guide pins are located on opposite corners of a caliper such that as the bearing engagement of the first pin with a support member decreases the bearing engagement of the second pin with the support member increases with a decrease in the thickness of a friction member. This structure functions in a desired manner to eliminate the tapered wear of a friction member, however, movement of the guide pins in the alignment bores of the support member can be affected by air that is compressed or expanded as a guide pin moves during a brake application.

### SUMMARY OF THE INVENTION

A primary object of the present invention is to provide a disc brake with first guide pin having a bearing surface that engages a first bore and a second guide pin having bearing surfaces that engages a second bore in a support member along a center of gravity of the caliper to align first and second friction members with a rotor and with changes in thickness of first and second friction members caused by wear engagement with a rotor such that an actuation force is applied to move the first and second friction member into perpendicular engagement with a rotor.

In more particular detail, the disc brake a first guide pin is affixed to a first ear and a second ear on the housing of the caliper to align a first bearing surface thereon with a center of gravity of the caliper and a second guide pin is affixed to a third ear and a fourth ear on the caliper to align a second bearing surface thereon with a center of gravity of the caliper. The housing for the caliper has an actuation section located on a first side of the rotor and is connected by a bridge to an arm located on a second side of the rotor. The actuation section has a bore therein that is parallel to the first and second bores in the support member for retaining a piston to define an actuation chamber. The first friction member is connected to the piston and the second friction member connected to the arm. To affect a brake application pressurized fluid is presented to the actuation chamber which acts on the piston and the actuation section to develop a force for moving the first and second friction members into engagement with the rotor to effect a brake application. The caliper is characterized in that the first and second bearing surfaces on the first and second guide pins essentially remain aligned with the center of gravity of the caliper as a change in the location of piston with respect to the actuation chamber is compensated by a corresponding change in a volume of fluid within the actuation chamber and as a result an actuation force is always perpendicularly applied to the first and second friction members.

An advantage of the disc brake results in a uniform wear of a thickness of a friction member on engagement with a rotor.

An object of this invention is to provide a disc brake with a guide pins maintain first and second friction members in parallel alignment with a rotor at all times, i.e. at rest and during a brake application.

A further distinction of this disc brake resides in guide pins that are affixed to a caliper with bearing surfaces that are aligned with the center of gravity of the caliper during a brake application and in a position of rest such that first and second friction members are in parallel alignment with a rotor.

### BRIEF DESCRIPTION OF THE DRAWINGS

Figure 1 is a perspective view of a disc brake made according to the principals of the present invention wherein a bearing engagement of first and second guide pins occurs along an axial plane defined by center of gravity for the caliper such that an actuation force is always perpendicularly applied to move first and second friction member into engagement with a rotor to effect a brake application;
Figure 2 is a sectional view taken along lines 2-2 of Figure 1 illustrating an initial relationship between first and second guide pins, friction pads, a support member and a rotor of the disc brake;
Figure 3 is a sectional view taken along lines 3-3 of Figure 1 illustrating an initial relationship between the caliper, rotor and first and second friction members;
Figure 4 is a sectional view showing the relationship of the components illustrated in Figure 2 with a decrease in the thickness of the first and second friction members; and
Figure 5 is a sectional view showing the relationship of the components illustrated in Figure 3 with a decrease in the thickness of the first and second friction members.

### DETAILED DESCRIPTION

In this specification where a same component is used in several different locations a same number with a ' may be used to identify the component.

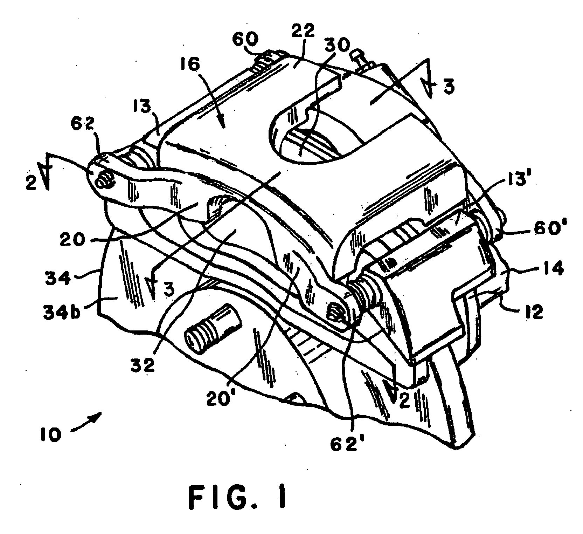

The disc brake 10 shown in Figure 1 is of a functional type disc brake such as disclosed in U.S. Patents 5,810,122, 5,988,761 and 6,454,056 for use in a brake system of a vehicle wherein an anchor or support member 12 is fixed to the housing 14 of a vehicle. The disc brake 10 has a caliper 16 with an actuation section 18 that is connected by a bridge 22 to arms 20, 20' and a piston 26 located in bore 24 of the actuation section 18 to define an actuation chamber 28. The caliper 16 is connected to the support member 12 through guide pins 36, 36' in accordance with the present invention such that a first friction member 30 that is connected to piston 26 and a second friction member 32 that is connected to arms 20, 20' are respectively located adjacent a first face 34a and a second face 34b of a rotor 34 that rotates with an axle of the vehicle.

In more detail, the first guide pin 36 is affixed to the caliper 16 and extends through a first bore 40 in the support member 12 while the second guide pin 36' is affixed to the caliper 16 and extends through a second bore 40' in the support member 12. The first bore 40, second bore 40' and bore 24 in the actuation section 18 are parallel to each other such when the first bore 40 receives the first guide pin 36 and the second bore 40' receives the second guide pin 36' the first friction member 30 and the second friction member 32 are located in corresponding planes that are parallel with faces 34a and 34b on rotor 34. When an operator desires to effect a brake application, pressurized fluid is supplied to an actuation chamber 28 of bore 24 that acts on piston 26 and the bottom 24a of bore 24, to develop an actuation force which moves the first friction member 30 into engagement with face 34a and the second friction member 32 into engagement with face 34b of rotor to retard the rotation of rotor 34 and effect a brake application.

Caliper 16 is further defined by having first ears 60 and 60' that extend from the actuation section 18 and second ears 62 and 62' that respectively extend from the arms 20 and 20'. In the manufacture of disc brake 10, caliper 16 is placed over the support member 12 and held in a fixture to align rails 13, 13' that receive ears on the first 30 and second 32 friction member in a perpendicular relationship with a plane corresponding with a rotor. At the same time, bore 24 in actuation chamber 28 is also in a same parallel alignment with rails 13, 13' and thereafter bores 60a in ear 60, bore 40 in support member 12 and bore 62a in ear 62 and bore 60b in ear 60', bore 40' in support member 12 and bore 62b in ear 62' are drilled or bored at the same time such to establish a parallel relationship within a desired tolerance between each bore.

After the bores have been drilled, bellow seal 80 is attached to ear 60 and the support member 12, bellow seal 82 is attached to ear 62 and support member12 while bellow seal 80' is attached to ear 60' and the support member 12, bellow seal 82' is attached to ear 62' and support member 12. Bellow seals 80, 80' and 82, 82' are essentially identical with the exception that bellow seals 80, 80' may have additional coils since the actuation section 18 of caliper 16 moves away from support member 12 while arms 20, 20' move toward the support member 12 during a brake application and with wear of the friction members 30, 32.

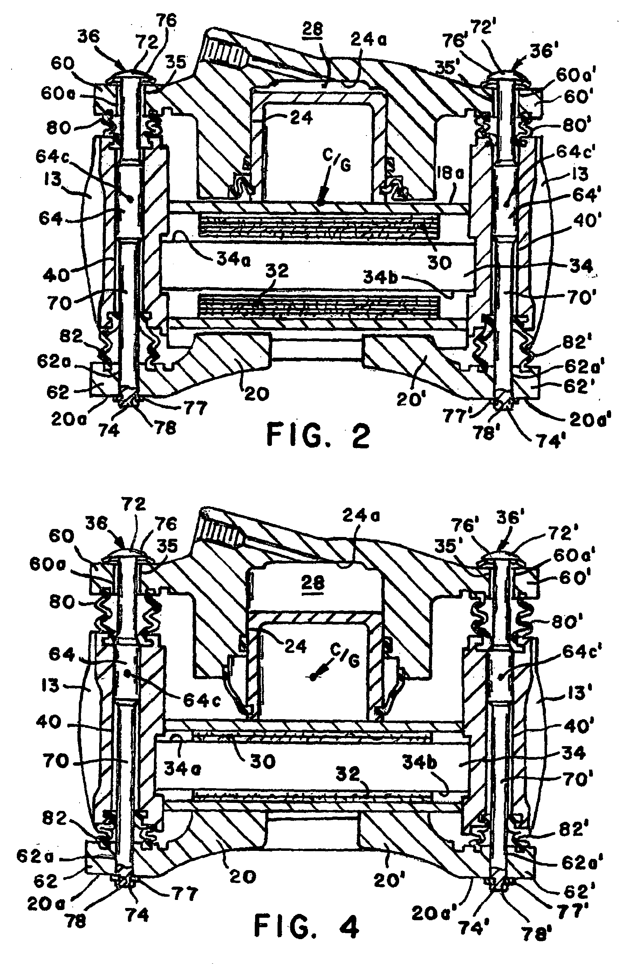

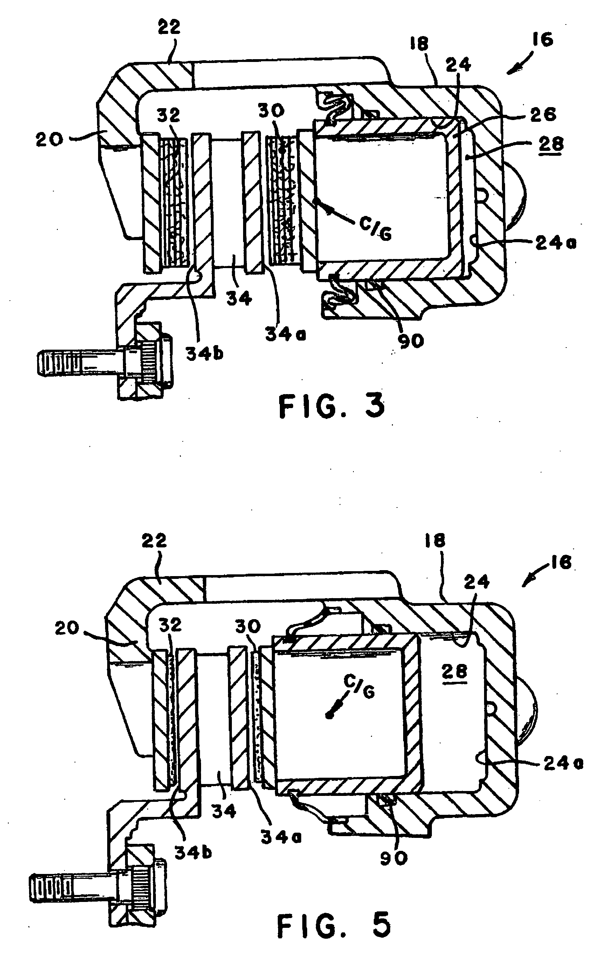

The center of gravity "c/g" of the caliper 16 is calculated and for this particular caliper 16 has been determined to be in a plane that is located along the face 18a of the actuations section 18 on the axis of the of bore 24, see Figures 2 and 3. At the "c/g" the weight of the caliper 16 is balanced such that the weight of the actuation section 18 is equal to the weight of the bridge 22 and arms 20, 20'. Once the location of the c/g has been determined this information is used in selecting a length and location for a bearing surface 64, 64' on the first 36 and second 36' pins.

The guide pins 36, 36' are designed to connect the caliper 18 with the support member 12 and are identical. Each guide pin is defined by a shaft 70 having a first end 72 and a second end 74 with a head 76 on a first end 72, a cylindrical bearing surface 64 spaced from the first end 72 and a groove 78 adjacent the second end 74. The diameter of the cylindrical bearing surface 64 is larger than the remainder of the shaft 70 and matched with the diameter of bore 40 in the support member 12.

Prior to inserting the guide pins 36,36' into the corresponding bores 40,40' the friction members 30 and 32 are mounted on rails 13,13' thereafter bores 60a,40 and 62a and bores 60a',40' and 62a' are aligned and end 74 of guide pin 36 inserted into bores 60a,40 and 62a and end 74' of guide pin 36' inserted into bores 60a',40' and 62a' such that grooves 78,78' are located adjacent face 20a on arm 20 and 20a' on arm 20' as illustrated in Figure 2. Snap rings 77,77' are located in grooves 78,78' to affix the guide pins 36,36' to the actuation section 18 and arms 20,20' to locate the center 64c,64c' of the bearing surfaces 64,64' along a place that is aligned with the c/g of the caliper 16 in a manner as illustrated in Figure 2.

In order to prevent the guide pins 36, 36' from vibrating and making a noise and assure that the guide pins 36, 36' remain parallel with bores 40, 40', sleeve spring 35, 35' are inserted into bores 60a of ear 60 and 60a' of ear 60' as the diameter of these bores are larger than shaft 70, 70' which has a diameter equal to the diameter as bore 62a in ear 20 and bore 62a' in 20'. It should be noted that guide pins 36, 36' do not place any clamping force on the caliper 16 and with the sleeve springs 35, 35' are located in parallel alignment with the bore 24 in the actuation section 18.

### Method of Assembly

This disc brake 10 is distinguished in its method of manufacturing in wherein the guide bores 40, 40' in the support member 12 and bores 60, 60' and 62, 62' are drilled or bored at the same time to provide for parallelism with the axial bore 24 in the actuation section 18 of caliper 16.

The disc brake 10 is manufactured in a manner that includes the following steps:
a caliper 16 is selected from a from a source that has a housing with an actuation section 18 that is connected by a bridge 22 to arms 20, 20', an axial bore 24 in the actuation chamber 18 and first 60 and third 62 horizontal ears that extend from the actuation section 18 and second 60' and fourth 62' horizontal ears that extend from the arms 20, 20';
a support member 12 is selected from a source having a housing with first 13 and second 13' spaced apart parallel rails that extend from a base 15;
the base 15 of the support member 12 is held in a position corresponding to attachment of a support 14 on a vehicle wherein the first 13 and second 13' spaced apart rails are perpendicular to a rotor 34;
the caliper 16 is positioned over the support member 12 and held with the first 60 and second 62 ears being aligned with the first rail 13 and the third 60' and fourth 62' ears being aligned with the second rail 13';
thereafter a first bore is drilled in the first ear 60, first rail 13 and the second ear 62 to define bores 60a, 40 and 62a and a second bore is drilled in the third ear 60', second rail 40' and fourth ear 62' to define bores 60a', 40' and 62a' such that the first bore and second bore are parallel with the axial bore 24 in the caliper 16;
a piston 26 is inserted in axial bore 24 of the caliper 16 to define an actuation chamber 28 in the actuation section 18;
the center of gravity c/g of the caliper 16 with the piston inserted there is calculated and determined to be along the axis of bore 24 and in a plane parallel with face 18a of the actuation section 18;
a first seal 80 to is attached to the ear 60 and the first rail 13 and a second seal 82 is attached to the second ear 62 and first rail 13 to seal the first bore;
a third seal 80' is attached to the third ear 60' and the second rail 13' and a fourth seal 82' is attached to the fourth ear 62' and the second rail 13' to seal the second bore;
first 36 and second 36' guide pins are selected from a source with each guide pin being distinguished by a shaft 70 with a head 76 on a first end 72 and a groove 78 adjacent a second end 74, a bearing surface 64 located between the head 76 and groove 78 with a mid point 64c corresponding to a distance equal to the distance along an axis of the axial bore 24 between a first plane in which first 60 and third 60' ears are located and the center of gravity c/g;
the first guide pin 36 is inserted in the first bore and the second guide 36 is inserted in the second bore such that bearing surfaces 64,64' are located in a plane that is aligned with the center of gravity c/g of the caliper 16 and as a result the caliper is balance on the support member 12; and
finally fasteners 77, 77' are inserted in grooves 78, 78' of the first 36 and second 36' guide pins to affix the first guide pin 36 to the first 60 and second 62 ears and the second guide pin 36 to the third 60' and fourth 62' ears such that the first 36 and second 36' guide pins are in parallel alignment with the axial bore 24 in the actuation section 18.

### Mode of Operation of the Invention

When it is desirable to effect a brake application, pressurized fluid is presented actuation chamber 28 that acts on piston 26 to move the first friction member 30 toward and into engagement with face 34a of rotor and acts on the bottom 24a of bore 24 to move the actuation section 18 and pull arms 20, 20' and correspondingly the second friction member 32 toward and into engagement with face 34a of rotor 34 to effect a brake application. As the face 30a on the first friction member 30 engages face 34a on rotor 34 and face 32a on the second 32 friction member engages face 34b on rotor 34, the engagement of ears 60 and 62 with pin 36 and ears 60' and 62' with pin 36 hold caliper 16 from twisting and the actuation force is applied to move the first 30 and second 32 friction member along a plane the is perpendicular to the rotor 34. As piston 26 moves toward rotor 34, the weight of the piston 26 is replaced by additional fluid that is added to actuation chamber 28 such that the center of gravity c/g of the caliper 16 remains at substantially the same location and as a result the bearing surfaces 64, 64' are also remained in alignment with the center of gravity c/g. Thus, the actuation force applied by the piston 26 and arms 20.20' to the first 30 and second 32 friction member is uniformly applied along a perpendicular plane with respect to the rotor 34 and as a result the thickness of the first 30 and second 32 friction members remains uniform from a leading edge to a trailing edge.

On termination of the presentation of pressurized fluid to the actuation chamber 28, the retraction seal 90 acts on piston 26 and the actuation section retraction 18 to move the first 30 and second 32 friction members away from faces 34a and 34b of the rotor 34 to define a running clearance. This running clearance is maintained as the bearing surfaces 64, 64' correspondingly engage the support member 12 in bores 40, 40' to balance the caliper 12 about the center of gravity and maintain the alignment without drooping or sagging.

The relationship between the bearing surfaces 64, 64' and the center of gravity c/g of the caliper 16 remains constant for the life of the first 30 and second 32 friction members even with thickness of the first 30 and second 32 friction members being reduced through wear due to engagement with rotor 34 as illustrated in Figures 4 and 5. Even though piston 26 moves out of actuation chamber 28 as a result of wear of the first 30 and second 32 friction members, the alignment of the bearing surfaces 64, 64' with the center of gravity c/g of the caliper 16 remain the same as the weight of that portion of piston 26 that moves past the center of gravity c/g is replaced with additional fluid that is added to actuation chamber 28. Thus, the relationship between the caliper 16 and the rotor remains constant for the life of the first 30 and second 32 friction members.

## Claims

1. In a disc brake (10) having a caliper (16) with a first guide pin (36) that is located in a first bore (40) of a support member (12) that is secured to a vehicle and a second guide pin (26') that is located in a second bore (40') of the support member (12) to align the caliper (16) over a rotor (34) associated with a wheel of the vehicle, said caliper (16) having an actuation section (18) that is connected by a bridge (22) to an arm (20,20'), said actuation section (18) having an actuation bore (24) therein for retaining a piston (26) to define an actuation chamber (28), a first friction member (30) is connected to said piston (26) and a second friction member (32) is connected to said arm (20,20'), said actuation chamber (28) on being presented with pressurized fluid from a source acting on said piston (26) and actuation section (18) to develop a force for moving said first (30) and second (32) friction members into engagement with said rotor (34) to effect a brake application, said caliper (16) being **characterized by** a first ear (60) that extends from the actuation section (18) and a second ear (62) that extends from the arm (20,20') , a third ear (60') that extends from the actuation section (18) and a fourth ear (62') that extends from the arm (20,20'), said first guide pin (36) being affixed to said first ear (60) and said second ear (62) and extending through said first bore (40) and said second guide pin (36') being affixed to said third ear (60') and said fourth ear (62') and extending through said second bore (40'), said first guide pin (36) having a first bearing surface (64) that engages said first bore (40) and said second guide pin (36') having a second bearing surface (64') that engages said second bore (40') along a plane for the center of gravity (C/G) for said caliper (16), said center of gravity (C/G) of said caliper (16) being maintained when said piston (26) is displaced from the actuation chamber (28) during a brake application and as a result of wear of the first (30) and second (32) friction members by compensating for a shift in weight of the piston (26) away from the center of gravity (C/G) through an increase in the fluid in the actuation chamber (28) such that center of gravity (C/G) of the caliper (16) remains substantially constant and the actuation force is applied along a perpendicular plane with respect to the rotor (34) and as a result substantially uniform wear occurs in the first (30) and second (32) friction membera.

2. In the disc brake (10) as recited in claim 1 wherein the engagement of the first guide pin (36) with said first (60) and second (32) ears and the engagement of the second guide pin (36') with the third (60') and fourth (62') ears resist any twisting moment caused by engagement of the first (30) and second (32) friction members with the rotor (34) to maintain the first (30) and second (32) friction members in a parallel alignment with the rotor (34).

3. In the disc brake (10) as recited in claim 2 wherein said first (40) and second (40') bores in said support member (12) are **characterized** as being parallel to the actuation bore (24).

4. In the disc brake (10) as recited in claim 1 wherein said first guide pin (36) slides in the first bore (40) and the second guide pin (36') slides in the second bore (36') during a brake application.

5. In the disc brake (10) as recited in claim 1 wherein said arm (20,20') moves toward said support member (12) while said actuation section (18) moves away from said support member (12) during a brake application and with a decrease in a thickness of said first (30) and second (32) friction members.

6. In the disc brake (10) as recited in claim 1 wherein said first (60), second (62), third (60') and fourth (62') ears are integral with and sealed in said caliper (16) and said first (40) and second (40') bores are integral with said support member (12).

7. In the disc brake (10) as recited in claim 1 wherein the engagement of the first bearing surface (64) on the first guide pin (36) with the support member (12) and the engagement of the second bearing surface (64') on the second guide pin (36') with the support member (12) is correspondingly transferred into the caliper (12) through the first (60) and second ears (62) through the first guide pin (36) and through the engagement of the third (60') and fourth (62') ears through the second guide pin (36') to maintain a desired running clearance with the rotor (34) without deviation from the perpendicular plane.

8. A method of manufacturing a disc brake (10) having a support member (12) fixed to a vehicle wherein first (36) and second (36') guide pins are fixed to a caliper (16) and extend through the support member (12) to align the caliper (16) with a rotor (34) in a brake system comprising the steps of:
selecting a caliper (16) from a source, said caliper (16) having housing with an actuation section (18) that is connected by a bridge (22) to arms (20,20), an axial bore (24) in the actuation section (18) and first (60) and third (60') horizontal ears that extend from the actuation section (18) and second (62) and fourth (62') horizontal ears that extend from the arms (20,20');
selecting a support member (12) from a source, said support member (12) having a housing with first (13) and second (13') spaced apart parallel rails that extend from a base (15);
holding said base (15) of said support member (12) in a simulated position corresponding to attachment to a vehicle wherein said first (13) and second (13') spaced apart rails are perpendicular to a rotor (34);
positioning and holding said caliper (16) over said support member (12) with said first (60) and second (62) ears being aligned with said first rail (13) and said third (60') and fourth (62') ears being aligned with said second rail (13');
drilling a first bore (60a, 40, 62a) through said first ear (60), first rail (13) and second ear (62) and a second bore (60a',40',62a') through said third ear (60'), second rail (13') and fourth ear (62') such that said first bore (60a, 40, 62a) and said second bore (60a',40',62a') are parallel with the axial bore (24) in said caliper (16);
inserting a piston (26) in said axial bore (24) of said caliper (16) to define an actuation chamber (28) in said actuation section (18);
determining a center of gravity (c/g) for said caliper (16) and said piston (26);
attaching a first seal (80) to said first ear (60) and first rail (13) and a second seal (82) to said second ear (62) and said rail(13) to seal said first bore (60a,40,62a);
attaching a third seal (80') to said third ear (60') and second rail (13') and a fourth seal (82') to said fourth ear (62') and said second rail (13') to seal said second bore (60a',40',62a');
selecting a first (36) and second (36') guide pins from a source, each guide pin having a shaft (70) with a head (76) on a first end (72) and a groove (78) adjacent a second end (74), a bearing surface (64) located between said head (76) and groove (78) with a mid point (64c) corresponding to a distance equal to the distance along an axis of the axial bore (24) between a first plane in which said first (60) and third (60') ears are located and said center of gravity (c/g);
inserting said first guide pin (36) in said first bore (60a,40,62a) and said second guide (36' in said second bore (60a',40',62a') such that said bearing surfaces (64,64') are located in a plane that is aligned with said center of gravity (c/g) of said caliper (16) and as a result said caliper (16) is balance on said support member (12); and
inserting fastener (77,77') in said groove (78,78') of said first (36) and second (36') guide pins to affix with said first guide pin (36) to said first (60) and second (62) ears and said second guide pin (36') to said third (60') and fourth (62') ears such that said first (36) and second (36') guide pins are in parallel alignment with said axial bore (24) in said actuation section (18).
